# EUROPEAN PATENT SPECIFICATION

(11) **EP 3 903 641 B1**
(45) Date of publication and mention of the grant of the patent: **29.01.2025**
(21) Application number: 21170294.9
(22) Date of filing: 23.04.2021
(51) Int. Cl.: A47B 97/00, F16B 12/26

(54) **FURNITURE ACCESSORY**
MÖBELZUBEHÖR
ACCESSOIRE DE MEUBLE

(30) Priority: 29.04.2020 IT 202000009352
(43) Date of publication of application: 03.11.2021
(73) Proprietor: Formenti & Giovenzana S.p.A., 20837 Veduggio con Colzano (MB) (IT)
(72) Inventor: FORMENTI, Leonardo, 20837 Veduggio con Colzano (IT)
(74) Representative: Simino, Massimo

(56) References cited:
- WO-A1-2017/001610
- DE-U- 7 331 520

## Description

The present invention relates to a furniture accessory as defined in the preamble of claim 1, specifically a furniture accessory comprising a structural member and an anchor base intended to be applied to a furniture component such as a piece of furniture.

For simplicity, the present disclosure is made without limitation with particular reference to a kitchen cabinet as an example of a possible furniture component and to a cross member, such as a connecting/bracing cross member, as a non-limiting example of a structural member.

In the field of furniture manufacture, furniture is manufactured and assembled, also using bracing accessories comprising structural members for connection of opposed sidewalls.

WO 2017/001610 discloses a furniture accessory according to the preamble of claim 1.

In order to simplify and speed up the application of said accessories, possibly also during furniture installation, there is a strong need to apply these accessories to furniture easily, quickly and possibly without requiring the use of tools.

An additional need to be fulfilled is to provide assembly safety devices that would ensure engagement between the connected parts, in spite of their being simply applied or possibly removed.

This need often requires the provision of parts projecting or jutting out of the accessories as manufactured, which increases transport and storage problems because the aforementioned assembly safety devices form elements that can fall off and be lost as long as the furniture accessory is not in use and that can be especially damaged as delicate parts projecting out of the structural member.

The problem at the basis of the present invention is to devise a furniture accessory as defined hereinbefore, that has such structural and functional features as to fulfill the above needs, while obviating the drawbacks as mentioned above with reference to prior art accessories.

This problem is solved by a furniture accessory as defined in claim 1.

Further features and advantages of the furniture accessory of the present invention will be apparent from the following description of a few preferred embodiments, which are given by way of illustration and without limitation with reference to the accompanying figures, in which:
- Figure 1 shows a top perspective view of a furniture accessory of the invention comprising a structural member coupled to an anchor base, with the anchor base fixed to the wall of a piece of furniture;
- Figure 2 shows a perspective view of the furniture accessory of Figure 1 as viewed from the bottom;

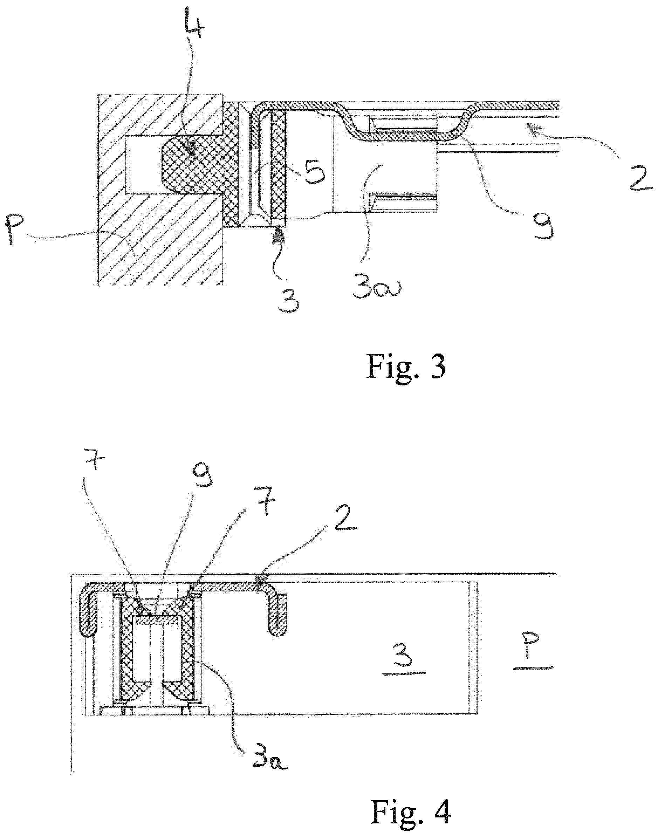

- Figure 3 is a longitudinal sectional plan view of the accessory of Figure 1;
- Figure 4 shows the plan view of Figure 3 from the right;
- Figure 5 shows the view of Figure 1 with the structural member of the accessory detached from the anchor base;

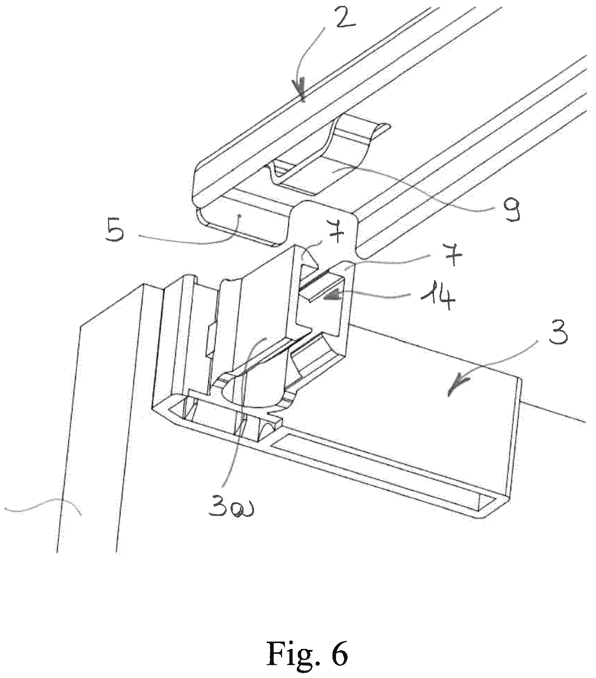

- Figure 6 shows the view of Figure 2 with the structural member of the accessory detached from the anchor base;
- Figure 7 is a lateral plan view of the accessory of Figure 5;
- Figure 8 is a longitudinal sectional plan view of the accessory of Figure 5;
- Figure 9 shows the plan view of Figure 8 from the right;
- Figure 10 shows a top plan view limited to the anchor base of the accessory of Figure 1;
- Figure 11 shows a lateral plan view of the accessory of Figure 1, as shown with both ends of the structural member;
- Figure 12 shows a longitudinal sectional plan view of the accessory of Figure 1, as shown with both ends of the structural member;
- Figure 13 shows a partially sectional top plan view limited to the crimping base of the accessory of Figure 1 during application thereof to a portion of a piece of furniture and
- Figure 14 shows a partially sectional top plan view limited to the crimping base of the accessory of Figure 1 when applied to a portion of a piece of furniture.

Referring to the accompanying drawings, numeral 1 generally designates a furniture accessory intended to be applied to a furniture component such as, by way of non-limiting example, a kitchen cabinet.

For simplicity the aforementioned kitchen cabinet is not shown in the figures in its entirety, but only limited to a portion P of its sidewall with the accessory 1 applied thereto.

More in detail, the furniture accessory 1 comprises a structural member 2 and an anchor base 3.

The anchor base 3 is intended to be fixed (preferably in a removable manner) by fixation means 4 to a portion P of a kitchen cabinet so as to be jointly supported by such portion P.

The structural member 2 extends along a longitudinal axis X-X between opposite ends 2a and 3a, for example to act as a bracing cross member between two sides or walls of the kitchen cabinet.

Advantageously, at least a first end 2a of such structural member 2 comprises fastening means 5 removably introduced into a fastening seat 6 formed in the anchor base 3.

It shall be noted that the aforementioned structural member 2 comprises a first longitudinal section S1 extending from the first end 2a.

Preferably, the fastening means 5 are introduced into the fastening seat 6 of the anchor base 3 to a predetermined depth, indicatively at least one centimeter, to move the structural member 2 to abutment against the anchor base 3.

It shall be noted that the aforementioned fastening means 5 are introduced into the fastening seat 6 with a rotation and/or translation component perpendicular to the longitudinal axis X-X of the structural member 2, so that the introduction of said fastening means 5 into the fastening seat 6 will ensure rigid connection of the structural member 2 to the anchor base 3 even under stresses directed along its longitudinal axis X-X.

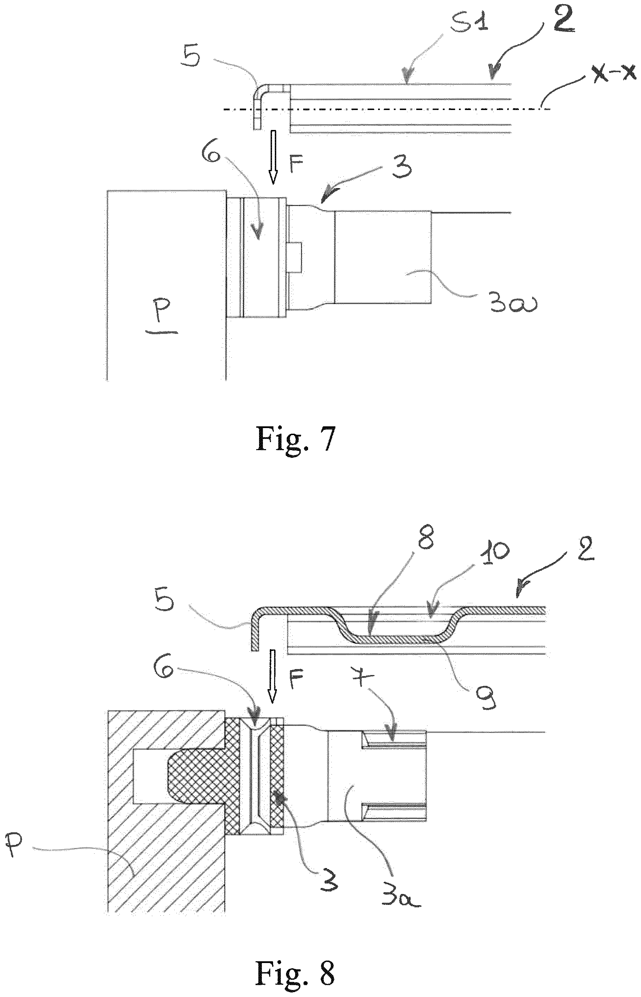

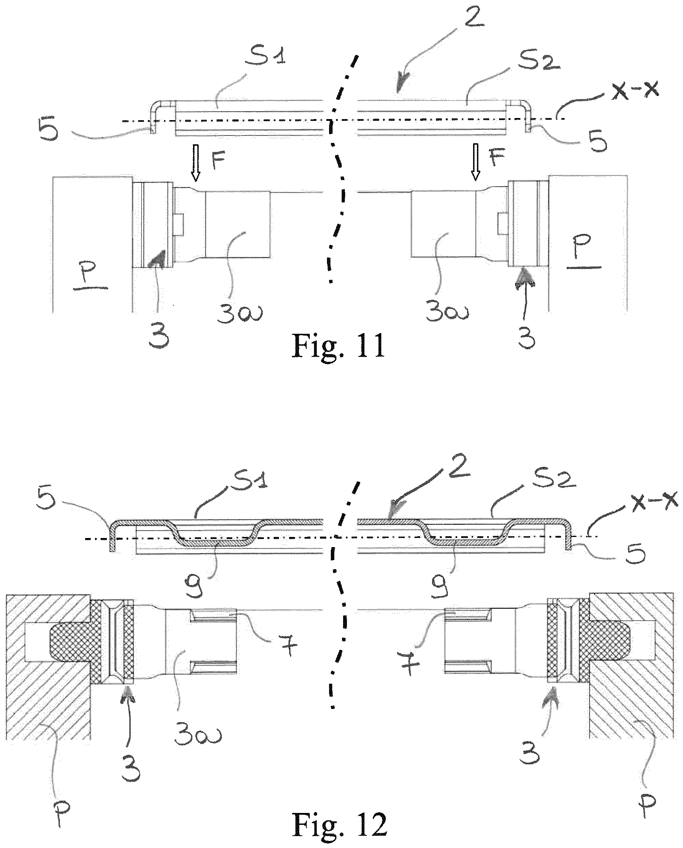

According to the illustrated embodiment, the aforementioned fastening means 5 are introduced into the fastening seat 6 with a translational movement perpendicular to the longitudinal axis X-X of the structural member 2 (see arrow F in Figures 7-9 and 11).

Still according to the illustrated embodiment, the aforementioned fastening means 5 of the aforementioned first end 2a of the structural member 2 are defined by a transversely projecting end flap, here projecting perpendicular to the direction in which the longitudinal axis X-X of the structural member 2 extends.

Preferably, the fastening seat 6 extends in the thickness of the anchor base 3 in a transverse direction, preferably in a perpendicular direction, relative to the direction in which the longitudinal axis X-X of the structural member 2 extends.

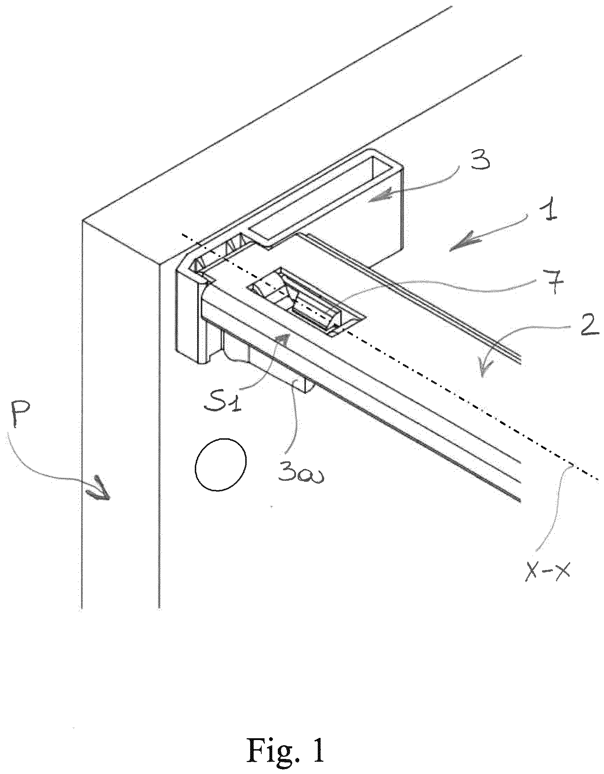

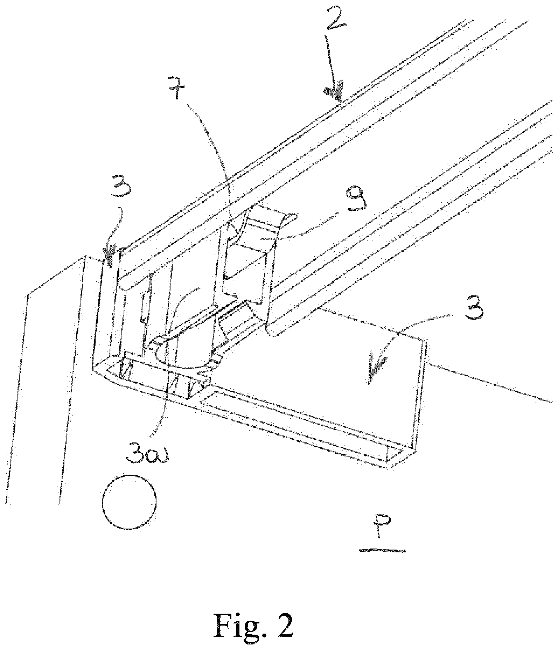

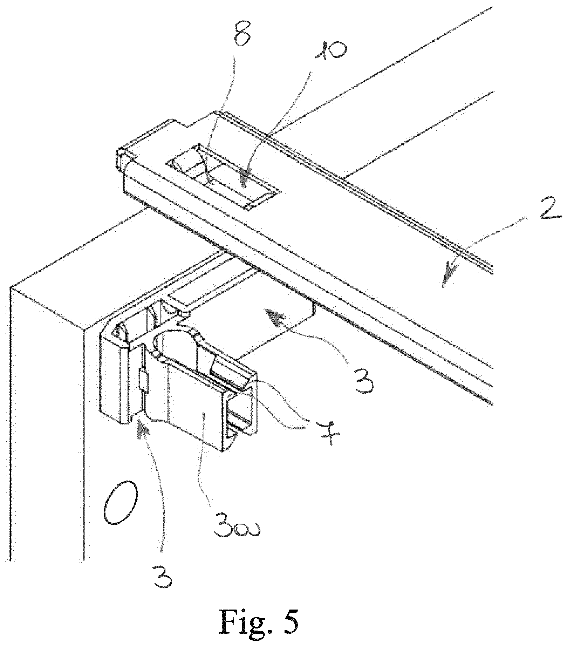

Preferably, the anchor base 3 is fixed to the portion P of the kitchen cabinet with the fastening seat 6 having the access opening facing upwards (as shown in Figures 1, 2, 5 and 8) so that the fastening means 5 (specifically of the aforementioned end flap) is introduced with an introducing movement from top to bottom, so that the weight force of the structural member 2 will cooperate in keeping the fastening means 5 inserted and engaged with the fastening seat 6.

Alternatively, according to an embodiment that is not shown, the anchor base 3 may be placed on the portion P of the kitchen cabinet at different angles, for example, with the aforementioned access opening of the fastening seat 6 vertically directed so that the fastening means 5 (namely the aforementioned end flap) will be introduced with a horizontal introducing movement. This orientation is useful, for example, if the structural member 2 shall be used to support the kitchen cabinet hanging from a wall, since with horizontal introduction of the fastening means 5 into the fastening seat 6 the interference of the fastening means 5 against the edges of the fastening seat 6 may be utilized to provide valid support to the kitchen cabinet.

In order to prevent the fastening means 5 from inadvertently slipping off the fastening seat 6, the accessory 1 of the invention comprises special retaining/anchoring means operable to prevent such inadvertent release.

In particular, in the illustrated embodiment:
- the anchor base 3 comprises a protrusion portion 3a projecting in the longitudinal axis X-X to face and overlap the aforementioned first longitudinal section S1 of the structural member 2 and, at the same time
- the protrusion portion 3a of the anchor base 3 comprises engagement means 7 removably and engagingly coupled with corresponding complementary retaining means 8 arranged in the aforementioned first longitudinal section S1 of the structural member 2 in a position that is spaced apart from the first end 2a.

Preferably, the removable coupling relationship established between said engagement means 7 and the complementary retaining means 8 of the anchor base 3 is a removable snap fit.

Advantageously, such engaging coupling relationship between said engagement means 7 and said complementary retaining means 8 opposes a predetermined load to the relative displacement of the structural member 2 away from the protrusion portion 3a of the anchor base 3 in a direction perpendicular to the longitudinal axis X-X of said structural member 2, to thereby act as safety means to keep the first end 2a of the structural member 2 engaged in the fastening seat 6 of the anchor base 3.

According to the illustrated embodiment, the aforementioned engagement means 7 of the protrusion portion 3a of the anchor base 3 comprise opposed fastening teeth which are adapted to cooperate with each other to engage and retain the complementary retaining means 8 of the structural member 2, by opposing a predetermined load against a displacement of the structural member 2 away from the protrusion portion 3a of the anchor base 3 in a direction perpendicular to the longitudinal axis X-X of the structural member 2.

More preferably, the above fastening teeth of the protrusion portion 3a define respective and opposed undercuts 14 parallel to the longitudinal axis X-X of said structural member 2, said undercuts 14 acting as abutments to retain the complementary retaining means 8 of the structural member 2.

Taking care to identify the volume of the structural element 2 as the volume resulting from its perimeter sides without considering the retaining means, it is fulfilled a condition in which said complementary retaining means 8 of the structural element 2 remain within said volume of the structural element 2, without projecting nor jutting out of such dimensions of the structural member 2 in a direction perpendicular to the longitudinal axis X-X.

In other words, with reference to the volume of the structural member 2 without considering said retaining means 8, it results that said complementary retaining means 8 of the structural member 2 are contained within said volume without projecting nor protruding from said volume of the structural member 2 in a direction perpendicular to the longitudinal axis X-X.

Hence, the aforementioned complementary retaining means 8 of the structural member 2 remain within the thickness of the structural member 2 measured in a direction perpendicular to the longitudinal axis X-X without projecting nor jutting out from the structural member 2.

By this arrangement, the aforementioned complementary retaining means 8 will be substantially received or housed in a protected position within the dimensions of the structural member 2, thereby preventing the above complementary retaining means 8 from being damaged before use of the structural members 2, for example during storage or transport of these complementary elements.

According to a preferred embodiment, such complementary retaining means 8 of said structural member 2 comprise a sheet element 9 engaged by the engagement means 7 of the protrusion portion 3a of the anchor base 3.

Preferably, the aforementioned sheet element 9 defines a metal sheet bridge element, e.g. a bridge lance metal sheet.

Preferably, the aforementioned sheet element 9 defines a rigid element.

Preferably, the aforesaid sheet element 9 is formed of one piece with the structural member 2.

Alternatively, the sheet element 9 may be formed as an insert element, rigidly and jointly fixed to the structural member 2.

Preferably, the aforementioned sheet element 9 is made of a metal material, although other materials may be also used such as, for example, a plastic material, possibly with reinforcing fillers to thereby provide greater strength and/or stiffness.

Preferably, the aforementioned sheet element 9 is positioned or housed at an opening 10 of said structural member 2 and the aforementioned engagement means 7 of the protrusion portion 3a of the anchor base 3 are positioned at such opening 10, to thereby avoid any interference between the anchor means 7 and the rest of the structural member 2.

Referring to the aforementioned fixation means 4 for fixing the anchor base 3 to the portion P of the piece of furniture, they can be variously configured. Thus screws, bolts, expansion bolts, socket head screws, press-fit pins or other currently known fastening systems.

According to the illustrated embodiment, the aforementioned fixation means 4 for fixing the anchor base 3 to the portion P of the piece of furniture comprise at least two separate fixation pins 11 and 12 projecting out of a flat contact wall 3b. Such fixation pins are intended to engage corresponding receiving holes 12 formed in the portion P of the piece of furniture on which the anchor base 3 is to be fixed.

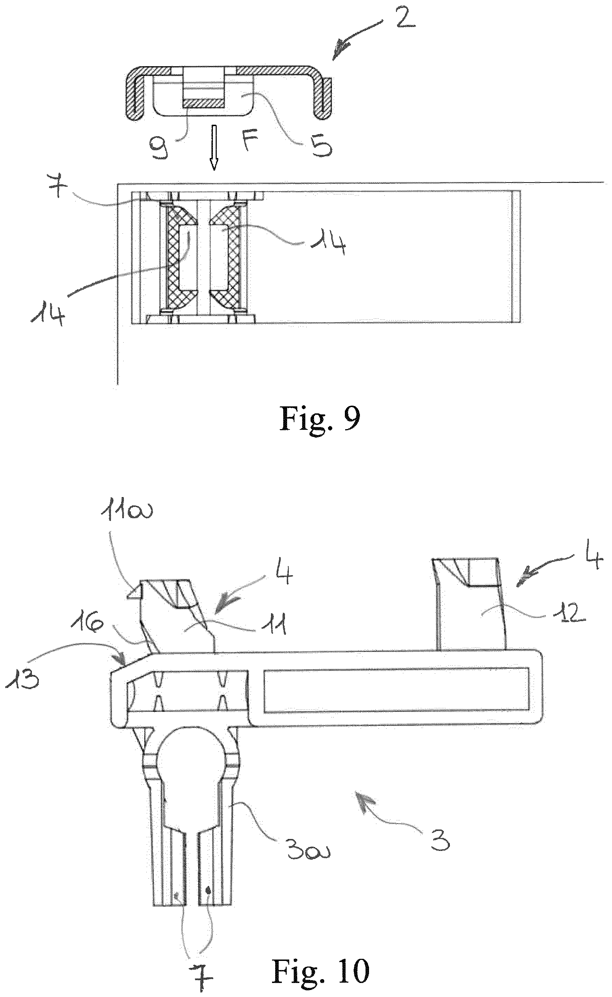

Preferably,
- at least one first fixation pin 11 comprises a crimping tab 11a at a free end thereof, in such position as to be able to crimp into the side wall of a respective receiving hole;
- said first fixation pin 11 comprises a recess 16 at an initial portion thereof proximate to a flat contact wall 3b and
- said crimping tab 11a and said recess 16 are angularly positioned on the same side as said first fixation pin 11,
wherein said crimping tab 11a and said recess 16 of said first fixation pin 11 are arranged in such positions as to face a flared end portion 13 (like in the embodiment of Figure 10) or an end edge of the aforementioned flat contact wall 3b.

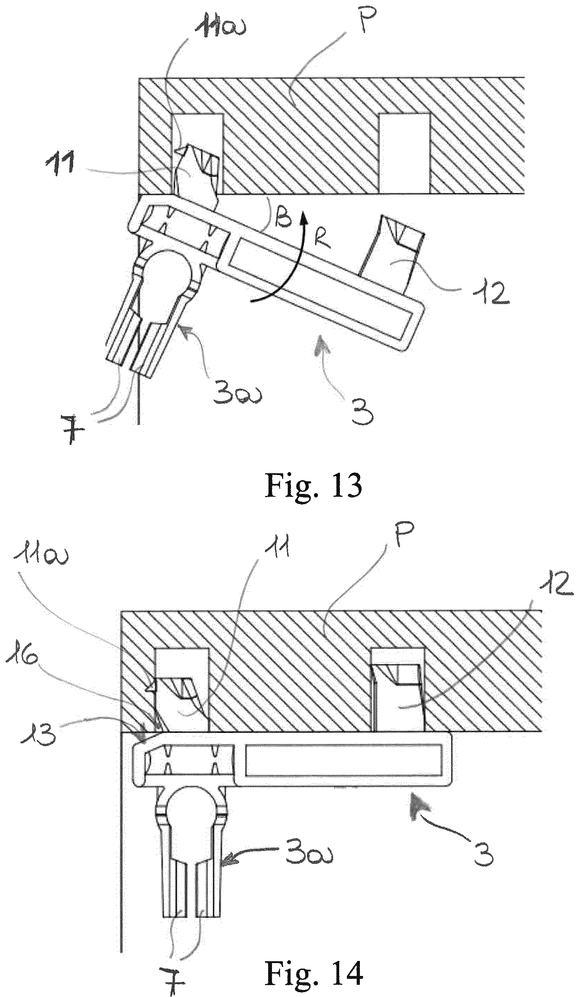

As shown in Figures 13 and 14, this allows the anchor base 3 to be firmly applied to the portion P of the piece of furniture, using the specially formed holes, without using tools or other fastening elements because, as the first fixation pin 11 is introduced into its respective hole while the support base is inclined at an angle β with respect to the portion P of the piece of furniture (see Figure 13), a simple rotation to move the flat contact wall 3b to full contact with the portion P of the piece of furniture (see arrow R in Figure 13) will cause the crimping tab 11a to crimp into the side wall of its respective receiving hole and, at the same time, the second fixation pin to fit into its respective hole.

As mentioned above, the aforementioned structural member 2 may be embodied as a connecting cross member which axially extends between one end 2a and one end 2b opposed thereto.

Generally, but without limitation:
- the aforementioned second opposed end 2b of the connecting cross member 2 is formed like the first end 2a and comprises fastening means 5 removably introduced into a fastening seat 6 of a second anchor base 3 which is formed like the first anchor base 3 and
- the connecting cross member 2 comprises additional similar complementary retaining means 8 arranged in a second longitudinal section S2 of said structural member 2 proximate to the aforementioned opposite end 2a and engagingly coupled preferably by snap fit with the engagement means 7 of the protrusion portion 3a of said second anchor base 3.

As clearly shown in the above description, the attachment device of the present invention fulfills the aforementioned needs and also obviates prior art drawbacks as set out in the introduction of this disclosure. Thus, with the accessory of the invention a structural member will be obtained, such as a connecting cross member and the like, that can be easily coupled or disengaged to/from the respective support bases fixed to the portion P of the piece of furniture, thereby providing safety means against accidental release while still allowing multiple structural members to be stacked for transport or storage, without damage to its parts.

A further advantage of the fixation device of the present invention lies in its simplicity and structural and functional strength.

Yet another advantage of the fastening device of the present invention is the feature of being able to take various shapes as needed, and to be applied in various modes or configurations.

Those skilled in the art will obviously appreciate that a number of changes and variants may be made to the attachment device as described hereinbefore, without departure from the scope of the invention, as defined in the following claims.

## Claims

1. **Furniture accessory** (1) comprising a structural member (2) and an anchor base (3), wherein:
- said anchor base (3) is intended to be fixed by fixation means (4) to a portion of an article of furniture;
- said structural member (2) extends along a longitudinal axis (X-X) between opposite ends;
- a first end (2a) of said structural member (2) comprises fastening means (5) removably introduced into a fastening seat (6) of said anchor base (3);
- said fastening means (5) being introduced into said fastening seat (6) with a rotation and/or translation component perpendicular to the longitudinal axis (X-X) of said structural element (2), so that the introduction of said fastening means (5) into said fastening seat (6) will ensure rigid connection of said structural member (2) to said anchor base (3) even under stresses directed along said longitudinal axis (X-X) and
- said structural member (2) comprises a first longitudinal section (S1) extending from said first end (2a),
- said anchor base (3) comprises a protrusion portion (3a) projecting in said longitudinal axis (X-X) to face and overlap said first longitudinal section (S1) of said structural member (2), and
- said protrusion portion (3a) of said anchor base (3) comprises engagement means (7) removably and engagingly coupled with corresponding complementary retaining means (8) arranged in said first longitudinal section (S1) of said structural member (2) in a position that is spaced apart from said first end (2a),
wherein said engaging coupling relationship between said engagement means (7) and said complementary retaining means (8) opposes a predetermined load to the displacement of said structural member (2) away from said protrusion portion (3a) of the said anchor base (3) in a direction perpendicular to the longitudinal axis (X-X) of said structural member (2), to thereby act as safety means to keep said first end (2a) of said structural member (2) engaged in said fastening seat (6) of said anchor base (3) **characterized in that** with reference to the volume of the structural member (2) without considering said retaining means (8), it results that said complementary retaining means (8) of the structural member (2) are contained within said volume without projecting nor protruding from said volume of the structural member (2) in a direction perpendicular to the longitudinal axis (X-X).

2. A furniture accessory (1) as claimed in claim 1, wherein the removable coupling relationship established between said engagement means (7) and the complementary retaining means (8) of the anchor base (3) is a removable snap fit.

3. A furniture accessory (1) as claimed in claim 1 or 2, wherein said fastening means (5) of said first end (2a) of said structural member (2) comprise a transversely projecting end flap, preferably projecting perpendicular to the direction in which the longitudinal axis (X-X) of said structural member (2) extends.

4. A furniture accessory (1) as claimed in claim 1, 2 or 3, wherein said fastening seat (6) extends in the thickness of said anchor base (3) in a transverse direction, preferably in a perpendicular direction, relative to the direction in which the longitudinal axis (X-X) of said structural member (2) extends.

5. A furniture accessory (1) as claimed in any of claims 1 to 4, wherein said engagement means (7) of said protrusion portion (3a) of said anchor base (3) comprise opposed fastening teeth which are adapted to cooperate with each other to engage and retain said complementary retaining means (8) of said structural member (2), by opposing a predetermined load against a displacement of said structural element (2) away from said protrusion portion (3a) of said anchor base (3) in a direction perpendicular to the longitudinal axis (X-X) of said structural member (2).

6. A furniture accessory (1) as claimed in claim 5, wherein said fastening teeth define respective and opposed undercuts (14) parallel to the longitudinal axis (X-X) of said structural member (2), said undercuts (14) acting as abutments to retain the complementary retaining means (8) of the structural member (2).

7. A furniture accessory (1) as claimed in any of claims 1 to 6, wherein said complementary retaining means (8) of said structural member (2) comprise a sheet element (9) engaged by said engagement means (7) of said protrusion portion (3a).

8. A furniture accessory (1) as claimed in claim 7, wherein said sheet element (9) defines a metal sheet bridge element, preferably a bridge lance metal sheet.

9. A furniture accessory (1) as claimed in claim 7 or 8, wherein said sheet element (9) is a rigid element, preferably made of a metal material.

10. A furniture accessory (1) as claimed in claim 7, or 8 or 9, wherein:
- said sheet element (9) is formed, positioned or housed at an opening (10) of said structural member (2) and
- said engagement means (7) of said protrusion portion (3a) of said anchor base (3) are positioned at said opening (10).

11. A furniture accessory (1) as claimed in any of claims 1 to 10, wherein said fixation means (4) of said anchor base (3) comprise at least two distinct fixation pins (11,12) which project out of a flat contact wall (3b) and are intended to engage corresponding receiving holes (12) arranged in the portion of the article of furniture which is designed to have said anchor base (3) secured thereto.

12. A furniture accessory (1) as claimed in claim 11, wherein:
- at least one first fixation pin (11) comprises a crimping tab (11a) at a free end thereof, in such position as to be able to crimp into the side wall of a respective receiving hole;
- said first fixation pin (11) comprises a recess (16) at an initial portion thereof proximate to a flat contact wall (3b) and
- said crimping tab (11a) and said recess (16) are angularly positioned on the same side as said first fixation pin (11),
wherein said crimping tab (11a) and said recess (16) of said first fixation pin (11) are arranged in such positions as to face an end edge or a flared end portion (13) of said flat contact wall (3b).

13. A furniture accessory (1) as claimed in any of claims 1 to 12, wherein said structural member (2) comprises a connecting cross-member extending axially between said first end (2a) and an opposed end (2b).

14. A furniture accessory (1) as claimed in claim 13, wherein:
- said second opposed end (2b) of said connecting cross member (2) is formed like said first end and comprises fastening means (5) removably introduced into a fastening seat (6) of a second anchor base (3) which is formed like said first anchor base (3) and
- said connecting cross member (2) comprises additional similar complementary retaining means (8) arranged in a second longitudinal section (S2) of said structural member (2) proximate to said opposite end (2a) and engagingly coupled preferably by snap fit with the engagement means (7) of the protrusion portion (3a) of said second anchor base (3).

## Patentansprüche

1. **Möbelzubehör** (1), das ein Strukturelement (2) und eine Ankerbasis (3) umfasst, wobei:
- die Ankerbasis (3) dazu bestimmt ist, durch Fixierungsmittel (4) an einem Abschnitt eines Möbelstücks fixiert zu werden;
- das Strukturelement (2) sich entlang einer Längsachse (X-X) zwischen gegenüberliegenden Enden erstreckt;
- ein erstes Ende (2a) des Strukturelements (2) Befestigungsmittel (5) umfasst, die abnehmbar in einen Befestigungssitz (6) der Ankerbasis (3) eingeführt sind;
- die Befestigungsmittel (5) mit einer Dreh- und/oder Translationskomponente senkrecht zur Längsachse (X-X) des Strukturelements (2) in den Befestigungssitz (6) eingeführt werden, so dass das Einführen der Befestigungsmittel (5) in den Befestigungssitz (6) eine starre Verbindung des Strukturelements (2) mit der Ankerbasis (3) auch bei entlang der Längsachse (X-X) gerichteten Belastungen gewährleistet und
- das Strukturelement (2) einen ersten Längsabschnitt (S1) umfasst, der sich von dem ersten Ende (2a) aus erstreckt,
- die Ankerbasis (3) einen Vorsprungsabschnitt (3a) umfasst, der in der Längsachse (X-X) herausragt, um dem ersten Längsabschnitt (S1) des Strukturelements (2) zugewandt zu sein und ihn zu überlappen, und
- der Vorsprungsabschnitt (3a) der Ankerbasis (3) Eingriffsmittel (7) umfasst, die abnehmbar und eingreifend mit entsprechenden komplementären Rückhaltemitteln (8) gekoppelt sind, die in dem ersten Längsabschnitt (S1) des Strukturelements (2) in einer Position angeordnet sind, die von dem ersten Ende (2a) beabstandet ist,
wobei die eingreifende Kupplungsbeziehung zwischen den Eingriffsmitteln (7) und den komplementären Rückhaltemitteln (8) der Verschiebung des Strukturelements (2) weg von dem Vorsprungsabschnitt (3a) der Ankerbasis (3) in einer Richtung senkrecht zur Längsachse (X-X) des Strukturelements (2) eine vorbestimmte Last entgegensetzt, um dadurch als Sicherheitsmittel zu wirken, um das erste Ende (2a) des Strukturelements (2) in dem Befestigungssitz (6) der Ankerbasis (3) in Eingriff zu halten
**dadurch gekennzeichnet, dass** bezüglich des Volumens des Strukturelements (2) ohne Berücksichtigung der Rückhaltemittel (8) sich ergibt, dass die komplementären Rückhaltemittel (8) des Strukturelements (2) innerhalb des Volumens enthalten sind, ohne aus dem Volumen des Strukturelements (2) in einer Richtung senkrecht zur Längsachse (X-X) herauszuragen oder vorzuspringen.

2. Möbelzubehör (1) nach Anspruch 1, wobei die abnehmbare Kopplungsbeziehung, die zwischen den Eingriffsmitteln (7) und den komplementären Rückhaltemitteln (8) der Ankerbasis (3) hergestellt wird, eine abnehmbare Schnappverbindung ist.

3. Möbelzubehör (1) nach Anspruch 1 oder 2, wobei die Befestigungsmittel (5) des ersten Endes (2a) des Strukturelements (2) eine quer herausragende Endlasche umfassen, die vorzugsweise senkrecht zu der Richtung herausragt, in der sich die Längsachse (X-X) des Strukturelements (2) erstreckt.

4. Möbelzubehör (1) nach Anspruch 1, 2 oder 3, wobei sich der Befestigungssitz (6) in der Dicke der Ankerbasis (3) in einer Querrichtung, vorzugsweise in einer senkrechten Richtung, relativ zu der Richtung erstreckt, in der sich die Längsachse (X-X) des Strukturelements (2) erstreckt.

5. Möbelzubehör (1) nach einem der Ansprüche 1 bis 4, wobei die Eingriffsmittel (7) des Vorsprungsabschnitts (3a) der Ankerbasis (3) entgegengesetzte Befestigungszähne umfassen, die so ausgelegt sind, dass sie miteinander zusammenwirken, um die komplementären Rückhaltemittel (8) des Strukturelements (2) in Eingriff zu bringen und zu halten, indem sie gegen eine Verschiebung des Strukturelements (2) weg von dem Vorsprungsabschnitt (3a) der Ankerbasis (3) in einer Richtung senkrecht zur Längsachse (X-X) des Strukturelements (2) eine vorbestimmten Last entgegensetzen.

6. Möbelzubehör (1) nach Anspruch 5, wobei die Befestigungszähne jeweilige und entgegengesetzte Hinterschneidungen (14) parallel zur Längsachse (X-X) des Strukturelements (2) definieren, wobei die Hinterschneidungen (14) als Widerlager wirken, um die komplementären Rückhaltemittel (8) des Strukturelements (2) zu halten.

7. Möbelzubehör (1) nach einem der Ansprüche 1 bis 6, wobei die komplementären Rückhaltemittel (8) des Strukturelements (2) ein Blechelement (9) umfassen, das von den Eingriffsmitteln (7) des Vorsprungsabschnitts (3a) eingegriffen wird.

8. Möbelzubehör (1) nach Anspruch 7, wobei das Blechelement (9) ein Metallblech-Brückenelement, vorzugsweise ein Brückenwerkzeug-Metallblech, definiert.

9. Möbelzubehör (1) nach Anspruch 7 oder 8, wobei das Blechelement (9) ein starres Element ist, das vorzugsweise aus einem Metallmaterial besteht.

10. Möbelzubehör (1) nach Anspruch 7, 8 oder 9, wobei:
- das Blechelement (9) an einer Öffnung (10) des Strukturelements (2) ausgebildet, positioniert oder untergebracht ist und
- die Eingriffsmittel (7) des Vorsprungsabschnitts (3a) der Ankerbasis (3) an der Öffnung (10) angeordnet sind.

11. Möbelzubehör (1) nach einem der Ansprüche 1 bis 10, wobei die Fixierungsmittel (4) der Ankerbasis (3) mindestens zwei getrennte Fixierungsstifte (11,12) umfassen, die aus einer flachen Kontaktwand (3b) herausragen und dazu bestimmt sind, in entsprechende Aufnahmelöcher (12) einzugreifen, die in dem Abschnitt des Möbelstücks angeordnet sind, an dem die Ankerbasis (3) befestigt werden soll.

12. Möbelzubehör (1) nach Anspruch 11, wobei:
- mindestens ein erster Fixierungsstift (11) an seinem freien Ende eine Crimplasche (11a) umfasst, die so positioniert ist, dass sie in die Seitenwand eines jeweiligen Aufnahmelochs gecrimpt werden kann;
- der erste Fixierungsstift (11) eine Aussparung (16) an seinem Anfangsabschnitt in der Nähe einer flachen Kontaktwand (3b) umfasst und
- die Crimplasche (11a) und die Aussparung (16) winklig auf der gleichen Seite wie der erste Fixierungsstift (11) angeordnet sind,
wobei die Crimplasche (11a) und die Aussparung (16) des ersten Fixierungsstifts (11) in solchen Positionen angeordnet sind, dass sie einer Endkante oder einem aufgeweiteten Endabschnitt (13) der flachen Kontaktwand (3b) zugewandt sind.

13. Möbelzubehör (1) nach einem der Ansprüche 1 bis 12, wobei das Strukturelement (2) einen Verbindungsquerträger umfasst, der sich axial zwischen dem ersten Ende (2a) und einem entgegengesetzten Ende (2b) erstreckt.

14. Möbelzubehör (1) nach Anspruch 13, wobei:
- das zweite entgegengesetzte Ende (2b) des Verbindungsquerträgers (2) wie das erste Ende geformt ist und Befestigungsmittel (5) umfasst, die abnehmbar in einen Befestigungssitz (6) einer zweiten Ankerbasis (3) eingeführt sind, die wie die erste Ankerbasis (3) geformt ist, und
- der Verbindungsquerträger (2) zusätzliche ähnliche komplementäre Rückhaltemittel (8) umfasst, die in einem zweiten Längsabschnitt (S2) des Strukturelements (2) in der Nähe des gegenüberliegenden Endes (2a) angeordnet sind und vorzugsweise durch Schnappverbindung mit den Eingriffsmitteln (7) des Vorsprungsabschnitts (3a) der zweiten Ankerbasis (3) eingreifend gekoppelt sind.

## Revendications

1. **Accessoire de meuble** (1) comprenant un élément structurel (2) et une base d'ancrage (3), dans lequel :
- ladite base d'ancrage (3) est destinée à être fixée par des moyens de fixation (4) à une partie d'un article de meuble ;
- ledit élément structurel (2) s'étend le long d'un axe longitudinal (X-X) entre des extrémités opposées ;
- une première extrémité (2a) dudit élément structurel (2) comprend des moyens de fixation (5) introduits de manière amovible dans un siège de fixation (6) de ladite base d'ancrage (3) ;
- lesdits moyens de fixation (5) étant introduits dans ledit siège de fixation (6) avec une composante de rotation et/ou de translation perpendiculaire à l'axe longitudinal (X-X) dudit élément structurel (2), de sorte que l'introduction dudit moyen de fixation (5) dans ledit siège de fixation (6) assurera un raccord rigide dudit élément structurel (2) à ladite base d'ancrage (3) même sous des contraintes dirigées le long dudit axe longitudinal (X-X) et
- ledit élément structurel (2) comprend une première section longitudinale (S1) s'étendant à partir de ladite première extrémité (2a),
- ladite base d'ancrage (3) comprend une partie saillante (3a) faisant saillie dans ledit axe longitudinal (X-X) pour faire face à, et chevaucher, ladite première section longitudinale (S1) dudit élément structurel (2), et
- ladite partie saillante (3a) de ladite base d'ancrage (3) comprend des moyens d'engagement (7) couplés de manière amovible et engageante avec des moyens de retenue complémentaires correspondants (8) disposés dans ladite première section longitudinale (S1) dudit élément structurel (2) dans une position qui est espacée de ladite première extrémité (2a),
dans lequel ladite relation de couplage d'engagement entre lesdits moyens d'engagement (7) et lesdits moyens de retenue complémentaires (8) oppose une charge prédéterminée au déplacement dudit élément structurel (2) loin de ladite partie saillante (3a) de ladite base d'ancrage (3) dans une direction perpendiculaire à l'axe longitudinal (X-X) dudit élément structurel (2), pour agir ainsi comme moyen de sécurité pour maintenir ladite première extrémité (2a) dudit élément structurel (2) engagée dans ledit siège de fixation (6) de ladite base d'ancrage (3)
**caractérisé en ce qu'**en référence au volume de l'élément structurel (2) sans considérer lesdits moyens de retenue (8), il en résulte que lesdits moyens de retenue complémentaires (8) de l'élément structurel (2) sont contenus dans ledit volume sans faire saillie ni dépasser dudit volume de l'élément structurel (2) dans une direction perpendiculaire à l'axe longitudinal (X-X).

2. Accessoire de meuble (1) selon la revendication 1, dans lequel la relation d'accouplement amovible établie entre ledit moyen d'engagement (7) et le moyen de retenue complémentaire (8) de la base d'ancrage (3) est un ajustement amovible par encliquetage.

3. Accessoire de meuble (1) selon la revendication 1 ou 2, dans lequel les moyens de fixation (5) de la première extrémité (2a) de l'élément structurel (2) comprennent un volet d'extrémité en saillie transversale, de préférence perpendiculaire à la direction dans laquelle s'étend l'axe longitudinal (X-X) de l'élément structurel (2).

4. Accessoire de meuble (1) selon la revendication 1, 2 ou 3, dans lequel ledit siège de fixation (6) s'étend dans l'épaisseur de ladite base d'ancrage (3) dans une direction transversale, de préférence dans une direction perpendiculaire, par rapport à la direction dans laquelle s'étend l'axe longitudinal (X-X) dudit élément structurel (2).

5. Accessoire de meuble (1) selon l'une quelconque des revendications 1 à 4, dans lequel lesdits moyens d'engagement (7) de ladite partie saillante (3a) de ladite base d'ancrage (3) comprennent des dents de fixation opposées qui sont adaptées pour coopérer les unes avec les autres afin d'engager et de retenir lesdits moyens de retenue complémentaires (8) dudit élément structurel (2), en opposant une charge prédéterminée à un déplacement dudit élément structurel (2) loin de ladite partie saillante (3a) de ladite base d'ancrage (3) dans une direction perpendiculaire à l'axe longitudinal (X-X) dudit élément structurel (2).

6. Accessoire de meuble (1) selon la revendication 5, dans lequel lesdites dents de fixation définissent des contre-dépouilles (14) respectives et opposées, parallèles à l'axe longitudinal (X-X) dudit élément structurel (2), lesdites contre-dépouilles (14) agissant comme des butées pour retenir les moyens de retenue complémentaires (8) de l'élément structurel (2).

7. Accessoire de meuble (1) selon l'une des revendications 1 à 6, dans lequel les moyens de retenue complémentaires (8) de l'élément structurel (2) comprennent un élément de feuille (9) engagé par les moyens d'engagement (7) de la partie saillante (3a).

8. Accessoire de meuble (1) selon la revendication 7, dans lequel ledit élément de feuille (9) définit un élément de pont en feuille de métal, de préférence une feuille de métal de lance de pont.

9. Accessoire de meuble (1) selon la revendication 7 ou 8, dans lequel l'élément de feuille (9) est un élément rigide, de préférence en métal.

10. Accessoire de meuble (1) selon la revendication 7, ou 8 ou 9, dans lequel :
- ledit élément de feuille (9) est formé, positionné ou logé dans une ouverture (10) dudit élément structurel (2) et
- les moyens d'engagement (7) de la partie saillante (3a) de la base d'ancrage (3) sont positionnés au niveau de l'ouverture (10).

11. Accessoire de meuble (1) selon l'une quelconque des revendications 1 à 10, dans lequel lesdits moyens de fixation (4) de ladite base d'ancrage (3) comprennent au moins deux goupilles de fixation distinctes (11, 12) qui font saillie d'une paroi de contact plate (3b) et sont destinées à s'engager dans des trous de réception correspondants (12) disposés dans la partie de l'article de meuble qui est conçue pour que ladite base d'ancrage (3) y soit attachée.

12. Accessoire de meuble (1) selon la revendication 11, dans lequel :
- au moins une première broche de fixation (11) comprend une languette de sertissage (11a) à son extrémité libre, dans une position telle qu'elle peut être sertie dans la paroi latérale d'un trou de réception respectif ;
- ladite première broche de fixation (11) comprend un renfoncement (16) dans sa partie initiale à proximité d'une paroi de contact plate (3b) et
- ladite languette de sertissage (11a) et ledit renfoncement (16) sont positionnés angulairement du même côté que ladite première broche de fixation (11),
dans lequel ladite languette de sertissage (11a) et ledit creux (16) de ladite première broche de fixation (11) sont disposés dans des positions telles qu'ils font face à un bord d'extrémité ou à une partie d'extrémité évasée (13) de ladite paroi de contact plate (3b).

13. Accessoire de meuble (1) selon l'une des revendications 1 à 12, dans lequel ledit élément structurel (2) comprend une traverse de raccordement s'étendant axialement entre la première extrémité (2a) et l'extrémité opposée (2b).

14. Accessoire de meuble (1) selon la revendication 13, dans lequel :
- ladite deuxième extrémité opposée (2b) de ladite traverse de liaison (2) est formée comme ladite première extrémité et comprend des moyens de fixation (5) introduits de manière amovible dans un siège de fixation (6) d'une deuxième base d'ancrage (3) qui est formée comme ladite première base d'ancrage (3) et
- ladite traverse de raccordement (2) comprend d'autres moyens de retenue complémentaires similaires (8) disposés dans une deuxième section longitudinale (S2) de ladite structure (2) à proximité de ladite extrémité opposée (2a) et couplés de préférence par encliquetage avec les moyens d'engagement (7) de la partie saillante (3a) de ladite deuxième base d'ancrage (3).
